# EUROPEAN PATENT APPLICATION

(11) **EP 4 697 651 A1**
(43) Date of publication of application: **18.02.2026**
(21) Application number: 25194587.9
(22) Date of filing: 07.08.2025
(51) Int. Cl.: H04L 9/40, H04L 9/32, H04L 67/1074, H04N 21/60, H04N 21/845

(54) **AUTHENTICATING CONTENT DELIVERED IN PEER-TO-PEER NETWORKS**

(30) Priority: 13.08.2024 US 202418802724
(71) Applicant: Google LLC, Mountain View, CA 94043 (US)
(72) Inventor: LINDMARK, Stefan, 111 22 Stockholm (SE)
(74) Representative: Crook, Hugh Alexander

(57) **Abstract**

A method includes receiving, by a processor of a first node in a media distribution system, from a second node in the media distribution system, a media segment. Authentication data related to the media segment is received from a third node in the media distribution system. The media segment is authenticated based on the authentication data. Responsive to successfully authenticating the media segment, the media segment is provided for consumption by the first node.

## Description

### TECHNICAL FIELD

Aspects and implementations of the present disclosure relate to computer networking, and in particular to authenticating content delivered in peer-to-peer networks.

### BACKGROUND

Peer-to-peer networks have become increasingly prevalent in various computing environments, allowing decentralized communication and resource sharing among connected devices. Peer-to-peer networks rely on direct connections between peers, enabling them to share information without the need for centralized servers. In some cases, a centralized node (e.g., tracker) is used to facilitate peer discovery and coordination among peers.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor to delineate any scope of the particular implementations of the disclosure or any scope of the claims. Its sole purpose is to present some concepts of the disclosure in a simplified form as a prelude to the more detailed description that is presented later.

An aspect of the disclosure provides a method that includes receiving, by a processor of a first node in a media distribution system, from a second node in the media distribution system, a media segment. Authentication data related to the media segment is received from a third node in the media distribution system. Validation data related to the media segment is generated using the media segment. Responsive to determining that the authentication data matches the validation data, the media segment is provided for consumption by the first node.

A further aspect of the disclosure provides a system comprising: a memory; and a processing device, coupled to the memory, the processing device to perform a method according to any aspect or implementation described herein.

A further aspect of the disclosure provides a non-transitory computer-readable medium comprising instructions that, responsive to execution by a processing device, cause the processing device to perform operations according to any aspect or implementation described herein.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example media distribution system for authenticating content delivered in peer-to-peer networks, in accordance with implementations of the present disclosure.
**FIG. 2** depicts an example live media data and authentication data distribution network, in accordance with implementations of the present disclosure.
**FIG. 3** depicts a flow diagram for an example method of authenticating content delivered in a media distribution system using peer-assisted delivery, in accordance with implementations of the present disclosure.
**FIG. 4** depicts a flow diagram for an example method of monitoring a media distribution system using peer-assisted delivery, in accordance with implementations of the present disclosure.
**FIG. 5** depicts a block diagram of an example computing device operating in accordance with one or more aspects of the present disclosure, in accordance with implementations of the present disclosure.

### DETAILED DESCRIPTION

When a live media stream is distributed through a media distribution system using peer-assisted delivery (e.g., a peer-to-peer network), each node of a peer-to-peer network, except for the root node, receives the live media stream from the root node or from another (non-root) node. The root node can receive the live media stream from a backend media distribution node outside of the peer-to-peer network. Other (non-root) nodes expect to be able to authenticate, playback, and redistribute (when instructed by the backend media distribution node) the received media stream.

If a malicious actor manipulates the media distribution system or nodes (e.g., by gaining access to the physical network or the network layer of a node), the malicious actor could potentially intercept the live media stream and spoof node connections with the intent of inserting fake media content into the peer-to-peer network. However, in some peer-to-peer media distribution systems, the nodes either lack the means of validating their received media stream for authenticity or perform time consuming validation operations that increase overall latency.

Aspects of the present disclosure address the above and other deficiencies by authenticating the content delivered in media distribution systems using peer-assisted delivery. In particular, a media distribution system using peer-assisted delivery can generate authentication data that is distributed, via a secondary data distribution path, to each node of the peer-to-peer network. This secondary data distribution path is different from the primary data distribution path that is used to distribute the media stream to the nodes. The authentication data can be sent directly to each node from a trusted source (e.g., the media distribution node or the root node of the peer-to-peer network), thereby not using the same distribution path as the media item being authenticated. In some implementations, the authentication data can include a hash of each media segment of a media stream or a hash of one or more frames (or packets) of each media segment (e.g., a hash of a keyframe, a hash of certain frames selected using a predetermined interval, etc.). "Hash" here refers to a process of constructing a hash value based on the visual contents of a frame.

The authentication data can be generated and/or sent to the nodes by the media distribution node that sends the respective media segment to the root node of the peer-assisted distribution system. Once a node receives the corresponding media segment, that node can generate node validation data (e.g., a hash of the received media segment, a hash of one or more frames of the received media segment, etc.) and compare the validation data to the authentication data. In response to the node determining that the authentication data matches the validation data, the node can provide the corresponding media segment for consumption and/or forward the media segment to one or more additional nodes. In response to determining that the authentication data does not match the validation data, the node can perform one or more remedial actions. The remedial actions can include signaling the mismatch to the media distribution node, ceasing the rendering of the media segment to the user of the node, preventing the forwarding of the media segment to any additional nodes, blocking further contact with the node that sent the problematic media segment, etc. In addition, the media distribution node can also perform one or more remedial action such as, for example, confirming the mismatch (e.g., whether a mismatch occurred between authentication data and validation data corresponding to the same media segment or to a different media segment due to latency), changing the primary media distribution path (e.g., topology) to prevent the problematic node from receiving further segments of the media stream, logging the incident for future investigation, etc.

Comparing authentication data and validation data (e.g., comparing hashes) uses significantly less time and computing resources in relation to decoding and rendering media segments. As such, the authentication data and validation data can be compared prior to or during the decoding operations and/or during the consumption of the media segment without any meaningful impact to the viewer. In implementations where authentication data is generated from one or more frames of the media segment, the authentication process can be performed while (e.g., in parallel) the viewer is consuming the media segment. Since the authentication process can be performed within a fraction of the time needed to consume the media segment, a mismatch allows the node to terminate the media segment without exposing the viewer to significant or noticeable misinformation.

Aspects of the present disclosure result in technological advantages in improved performance of the nodes in peer-assisted networks and improved overall performance of the media distribution system. In particular, the aspects of the present disclosure enable a media distribution system using peer assisted delivery to authenticate the media each node of the peer-to-peer network receives. Additionally, the technology disclosed herein can improve network security while reducing the consumption of computational, memory, and bandwidth resources by preventing the distribution of fraudulent and malicious media content.

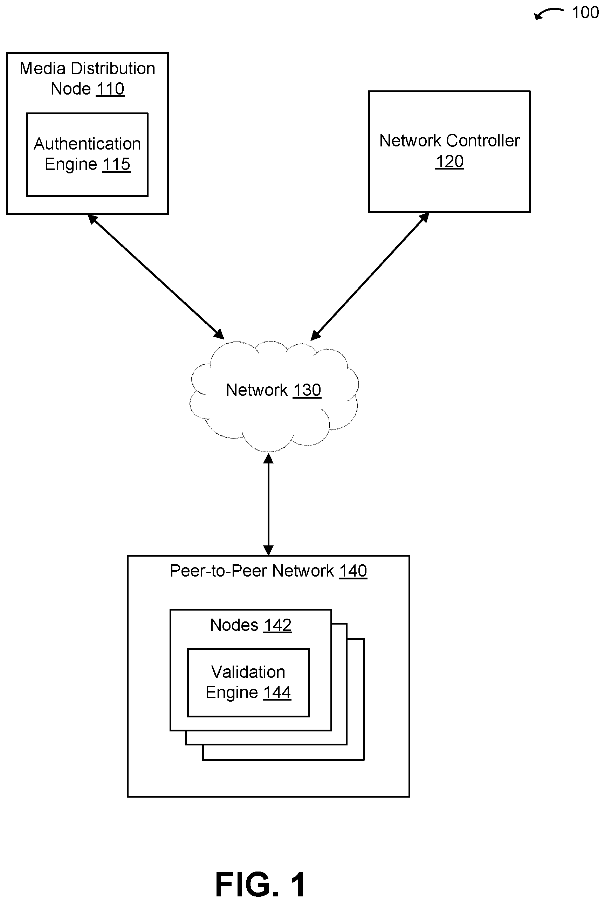

**FIG. 1** illustrates an example media distribution system 100 for authenticating content delivered in peer-to-peer networks, in accordance with at least one implementation. System 100 can include media distribution node 110, network controller 120, and peer-to-peer network 140 connected to network 130, such as a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), paths, hubs, switches, server computers, and/or a combination thereof.

Media distribution node 110 can provide live media data for transmission within peer-to-peer network 140. In some implementations, media distribution node 110 can be part of peer-to-peer network 140. In some implementations, media distribution node 110 can be in a network different from peer-to-peer network 140. Media distribution node 110 can include one or more sources for live media data (e.g., a live media stream). For example, media distribution node 110 can be part of a cloud computing environment that provides live media data to various entities, such as a video conferencing platform or a video broadcasting platform. Upon receiving a connection from one or more sources of peer-to-peer network 140 (e.g., from a root node), media distribution node 110 can provide (e.g., push) live media data (e.g., individual frames of a media item) to the one or more root nodes via one or more media data connections.

Network controller 120 can manage peer-to-peer network 140. For example, network controller 120 can receive requests (e.g., from one or more client devices, from nodes 142, etc.) to register with peer-to-peer network 140 and can configure peer-to-peer network 140 based on the nodes (e.g., nodes 142) included in peer-to-peer network 140. Network controller 120 can generate one or more configuration files for peer-to-peer network 140. The configuration files can define one or more data distribution paths within peer-to-peer network 140 between nodes 142 for transmission of live media data as the live media data is received by a respective peer of nodes 142. Network controller 120 can send portions of the network configuration (or the whole network configuration) to each node (e.g., nodes 142) of peer-to-peer network 140. Based on the received network configuration (or portions thereof), the nodes of the peer-to-peer network 140 can establish one or more media data connections for providing (e.g., pushing) live media data within peer-to-peer network 140.

In some implementations, network controller 120 generates a network configuration (e.g., network topology) with semi-static data paths. For example, paths between nodes of the peer-to-peer network (e.g., media data connections) can only be changed (e.g., added, removed) when the nodes within the peer-to-peer network change (e.g., when nodes are added to the network, when nodes disconnect from or leave the network, etc.).

In some implementations, the network configuration generated by network controller 120 can include one or more data distribution paths. For example, a node of the peer-to-peer network (e.g., peer-to-peer network 140) can be configured to receive redundant media data to ensure smooth media playback at the node. In some implementations, a node can receive two copies of the media data: one copy from one peer node and another copy from another peer node. These nodal relationships (e.g., content feeder-content receiver relationships) can be ephemeral (short-living) such that a node can receive different segments of the same media stream from multiple different peer nodes. Network controller 120 can periodically generate a new network configuration with data distribution paths where the new network configuration (or portions thereof) can be transmitted to the nodes of the peer-to-peer network, and one or more new media data connections can be established by the nodes in accordance with the new network configuration. In some implementations, media data connections can be disconnected if there is no corresponding data distribution path in the network configuration.

Peer-to-peer network 140 can be used for transmission of live media data between one or more nodes. Peer-to-peer network 140 can be connected to another network (e.g., network 130). In some implementations, the media data that is transmitted within peer-to-peer network 140 can originate outside of peer-to-peer network 140 and/or can be accessed via another network (e.g., network 130).

In some implementations, peer-to-peer network 140 includes one or more nodes 142. Nodes 142 can include one or more processing devices, volatile and non-volatile memory, data storage, one or more input/output peripherals such as network interfaces. In some implementations, nodes 142 can be singular devices such as smartphones, tablets, laptops, desktops, workstations, edge devices, embedded devices, servers, network appliances, security appliances, etc. In some implementations, nodes 142 can include multiple devices of similar or varying architecture such as computing clusters, data centers, co-located servers, enterprise networks, geographically disparate devices connected via virtual private networks (VPNs), etc. In some implementations, nodes 142 can include hardware devices such as those just described, virtual resources such as virtual machines (VMs) and containerized applications, or a combination of hardware and virtual resources.

Nodes 142 can include one or more root nodes and one or more non-root nodes. In some implementations, nodes that directly receive media data from media distribution node 110 can be referred to as "root" nodes (e.g., the topmost node of a tree). Alternatively, media distribution node 110 can act as the root node. To join peer-to-peer network 140, a node can send a request to network controller 120 to register with peer-to-peer network 140. Network controller 120 can generate a new network configuration based on the addition of the node to the peer-to-peer network and can transmit the new configuration (or portions thereof) to one or more nodes of the peer-to-peer network (e.g., the nodes that have different (e.g., more, fewer) data distribution paths as compared to the previous network configuration as a result of the new node joining the network).

Root nodes can be configured (e.g., by network controller 120) to connect directly to media distribution node 110. In some implementations, root nodes can connect to more than one media distribution node. After establishing a connection (e.g., media data connection) with media distribution node 110, media distribution node 110 can provide (e.g., push) live media data to the root node via the established connection. In some implementations, the connection stays open until all live media data has been transmitted to the root node (e.g., until all frames of a media item have been individually transmitted). The root node can also be configured (e.g., by network controller 120) to connect to one or more non-root nodes of peer-to-peer network 140 and can establish connections to each of the one or more non-root nodes. Upon receiving live media data from media distribution node 110, the root node can immediately (or with insignificant delay) retransmit the received live media data to the one or more non-root nodes. For example, the root node can receive live media data via a first media data connection connected to media distribution node 110 and can immediately (or with insignificant delay) copy the received live media data to a second media data connection connected to another node of peer-to-peer network 140. In some implementations, the root node does not save the live media data in a local buffer. As live media data is received, the root node can immediately (or with insignificant delay) reproduce the received live media data (e.g., via a media player of the root node).

Non-root nodes can be configured (e.g., by network controller 120) to connect to one or more other nodes (e.g., root nodes, non-root nodes) of peer-to-peer network 140. A node can be configured to connect to one or more peer nodes. In some implementations, a node can be configured to connect to two or more peer nodes, such that the node would have at least one forward error correction connection (for redundancy). After the node has established connections with the one or more peer nodes, those peer node(s) can provide (e.g., push) live media data to the content receiving node via data connection(s).

In some implementations, a node can be configured (e.g., by network controller 120) to connect to one or more parent (feeder) nodes (node(s) from which content is received) and connect to one or more child nodes (node(s) to which content is pushed). After the node has established connections with the one or more parent and child nodes, the node can provide (e.g., push) live media data to the child node(s) via the established media data connection(s) as soon as the node receives the live media data from its parent node(s). In some implementations, if a node receives more than one copies (e.g., two copies, three copies, etc.) of the live media data (e.g., one copy from each of two or more parent nodes), the node can deduplicate the data and can provide only one copy of the live media data to the child node(s). In some implementations, a node can only establish connection(s) with the parent node(s) it is configured to connect to and will wait for its child node(s) to establish connections with it (instead of establishing connections with the child node(s) itself).

Media distribution node 110 can include authentication engine 115 that is configured to generate authentication data for each media segment generated by media distribution node 110. In some implementations, the authentication data can include a hash of a media segment of the media data, a hash of one or more frames (or packets) of a media segment (e.g., a hash of one or more keyframes, a hash of certain frames selected using a predetermined interval, etc.). To generate the hash, authentication engine 115 can apply a hashing function to the frames and/or media segment, generate a hash digest using the frames and/or media segment, etc. The authentication data can be sent to each node of peer-to-peer network 140. In some implementations, the authentication data can be sent to a subset of nodes 142.

Each node 142 can include a respective validation engine 144 that is configured to generate validation data for each media segment received by the respective node 142. In some implementations, the validation data can include a hash of a media segment received by the respective node 142, a hash of one or more frames (or packets) of a media segment received by the respective node 142, etc. To generate the hash, validation engine 144 can apply a hashing function to the frames and/or media segment, generate a digest (e.g., a hash) using the frames and/or media segment, etc. In some implementations, the authentication data can include metadata or other data used to identify to which media segment the authentication data is related. The metadata can include, for example, timestamps, frame identification data (e.g., a keyframe identifier), other identification data, etc.

Each node 142 can compare the received authentication data to the validation data generated by said node. In response to a node 142 determining that the authentication data matches the validation data, the node 142 can provide the corresponding media segment for consumption by the user of the node (e.g., via, for example, a client device). In some implementations, the node 142 can also provide the media segment to one or more child nodes via one or more media data connections. In response to determining that the authentication data does not match the validation data, the node 142 and/or the media distribution node 110 can perform one or more remedial actions.

The remedial actions performed by a node 142 can include one or more of signaling the mismatch to media distribution node 110, ceasing or preventing the rending of the media segment, refraining from providing the media segment to any child nodes, blocking further contact (preventing receipt of any subsequent media segments) with the node that sent the problematic (mismatched) media segment, etc. The remedial actions performed by media distribution node 110 can include one or more of collecting data (e.g., identification data, diagnostic data, metadata, etc.) from the node reporting the mismatch, identifying the parent problematic parent node that provide potentially malicious content (e.g., by sorting multiple mismatch reports received from a set of nodes and identifying the top most node in the distribution path), determining whether the mismatch occurred between authentication data and validation data related to the same media segment or different media segments (e.g., whether authentication data of one media segment was compared to validation data of a different media segment due to latency), changing the media distribution path to prevent the problematic node from receiving further media content, preventing the problematic node from rejoining the data distribution path, logging the mismatch incident for future investigation, remodeling the data distribution path as if the problematic node left due to a normally occurring reason (node power loss, intentional leaving or closing of an application, etc.), providing the remaining node with new network configuration data and/or a new data distribution path, and so forth.

As discussed above, the authentication data can include a hash of a media segment or a hash of one or more frames of the media segment. In implementations where the media segment is hashed, the node can generate the validation data and perform the authentication operation prior to decoding and/or providing the media segment for consumption. This allows the system of the present disclosure to prevent any consumption of malicious media. Alternatively, the authentication process can be performed during consumption of the media segment. In implementations where one or more frames of the media segment are hashed, such as a keyframe or a frame of each predetermined interval (e.g., each 10^{th} frame of the media segment), the node can first decode the media segment to obtain the frames needed to generate the validation data. During the authentication process, the media segment can be provided for consumption to prevent latency issues. In response to determining a mismatch between the authentication and the validation data, the node can cease providing the media segment for consumption. In most instances, the malicious content consumed by the user during the authentication process can be negligible (e.g., approximately 300 milliseconds of playback in implementations using each 10^{th} frame of the media segment for validation).

In implementations of the disclosure, a "user" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether media distribution node 110, network controller 120, and/or nodes 142 collect user information (e.g., information about a user's social network, social actions or activities, profession, a user's preferences, or a user's current location), or to control whether and/or how to receive content from media distribution node 110, network controller 120, and/or nodes 142 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by media distribution node 110, network controller 120, and/or nodes 142.

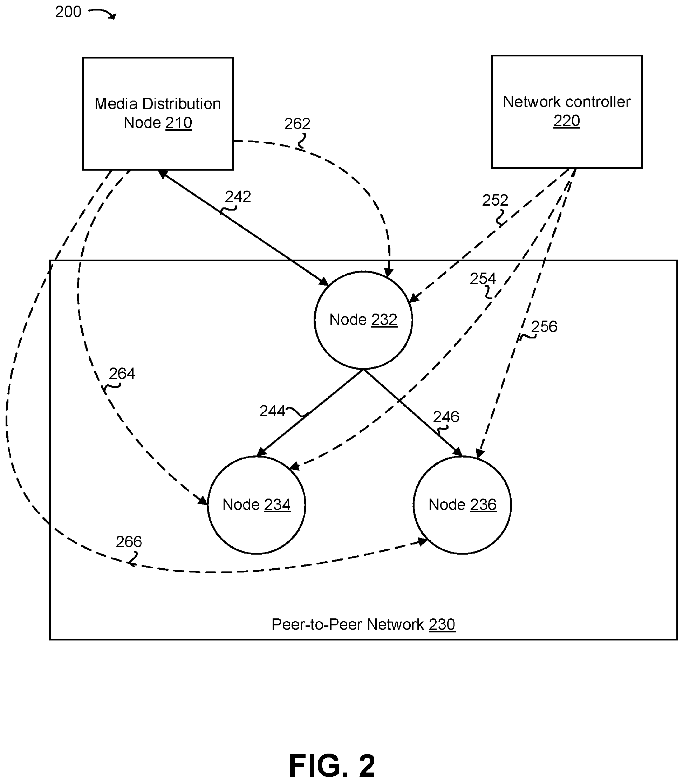

**FIG. 2** depicts an example live media data and authentication data distribution network 200, in accordance with implementations of the disclosure. In some implementations, network 200 can include media distribution node 210, network controller 220, and peer-to-peer network 230 with node 232, node 234, and node 236. Network controller 220 can generate a network configuration for network 200. The network configuration can include one or more data distribution paths for transmission of live media data between the nodes of peer-to-peer network 230. Network controller 220 can transmit the network configuration (or parts thereof) to the nodes of peer-to-peer network 230 via one or more network controller connections. For example, when registering with the peer-to-peer network, each node (e.g., root node 232, non-root node 234, non-root node 236) can establish a connection (e.g., network controller connection 252, network controller connection 254, network controller connection 256) with network controller 220 which is used for receiving network configuration data and updates.

Node 232, after receiving the network configuration from network controller 220 (e.g., via network controller connection 250), can establish one or more media data connections based on the data distribution paths included in the network configuration. For example, node 232 can be designated as a root node (e.g., in the network configuration) and can establish media data connection 242 with media distribution node 210. Media distribution node 210 can use media data connection 242 for providing (e.g., pushing) live media data to node 232. In some implementations, the network configuration can include a data distribution path between node 232 and node 234 (e.g., the network configuration can designate node 234 as a child node of node 232) and a data distribution path between node 232 and node 236 (e.g., the network configuration can designate node 236 as a child node of node 232). Node 232 can establish media data connection 244 with node 234 and media data connection 246 with node 236. Upon receiving live media data from media distribution node 210, node 232 can immediately (or with insignificant delay) retransmit the live media data to node 234 via media data connection 244 and to node 236 via media data connection 246. Media data connections 242, 244 and 246 can be related to the primary data distribution path used to provide live media to the nodes of peer-to-peer network 230.

Nodes 234, 236, after receiving the network configuration from network controller 220 (e.g., via network controller connections 254, 256), can establish one or more media data connections based on the data distribution paths included in the network configuration. For example, nodes 234, 236 can be designated as peering nodes (e.g., in the network configuration) and can receive live media data from one or more other nodes of peer-to-peer network 230. If media data connection 244, 246 has not already been established (e.g., by node 232), nodes 234, 236 can establish media data connections 244, 246 with node 232. Nodes 234, 236 can use media data connections 244, 246 to receive live media data provided (e.g., pushed) by node 232.

Media distribution node 210 can establish a secondary data distribution path to provide authentication data to nodes 232, 234, and 236. The secondary data distribution path can include authentication data connection 262, 264, and 266. As shown, authentication data connection 262 can be used by node 232 to receive authentication data from media distribution node 210, authentication data connection 264 can be used by node 234 to receive authentication data from media distribution node 210, and authentication data connection 266 can be used by node 236 to receive authentication data from media distribution node 210. As previously discussed, the authentication data can include a hash of a media segment or a hash of one or more frames of the media segment. Once a node receives the corresponding media segment via the primary distribution path (e.g., via media data connection 242, 244, 246), the node can generate the validation data of the media segment. The node can then determine whether the authentication data matches the validation data. The validation data generating process and/or the authentication process can be performed prior to the media segment being provided (by the node) for consumption, while the media segment is being provided for consumption, after the media segment has been consumed, or any combination thereof. Responsive to detecting a mismatch between the authentication data and the validation data, the node 232, 234, 236 that detected the mismatch can report the mismatch to media distribution node 210 and/or perform one or more remedial actions.

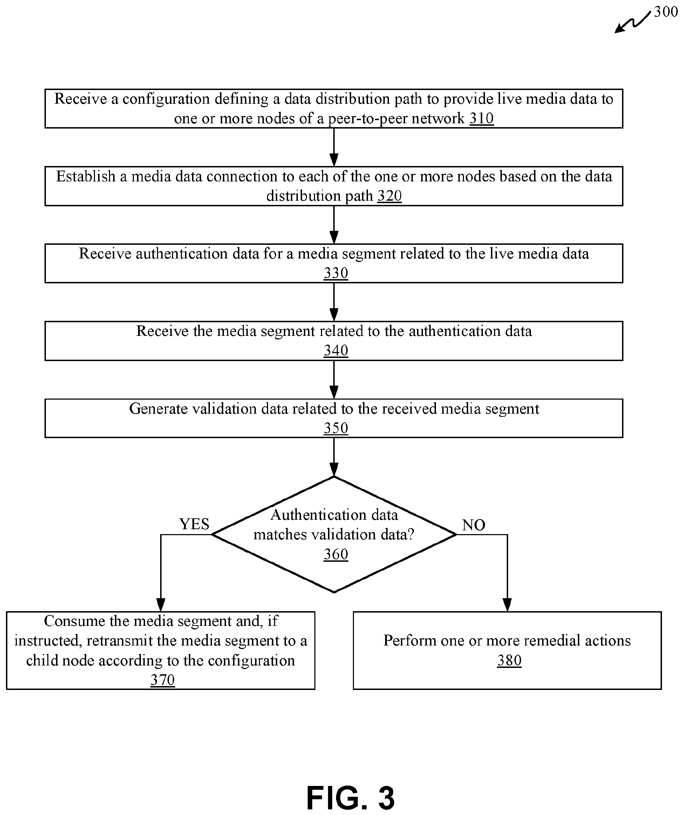

**FIG. 3** depicts a flow diagram of a method 300 for authenticating content delivered in a media distribution system using peer-assisted delivery, in accordance with implementations of the present disclosure. Method 300 can be performed by processing logic that can include hardware (circuitry, dedicated logic, etc.), software (e.g., instructions run on a processing device), or a combination thereof. In some implementations, some or all the operations of method 300 can be performed by a node 142 of peer-to-peer network 140.

For simplicity of explanation, method 300 of this disclosure is depicted and described as a series of acts. However, acts in accordance with this disclosure can occur in various orders and/or concurrently, and with other acts not presented and described herein. Furthermore, not all illustrated acts can be required to implement the method 300 in accordance with the disclosed subject matter. In addition, those skilled in the art will understand and appreciate that the method 300 could alternatively be represented as a series of interrelated states via a state diagram or events. Additionally, it should be appreciated that the method 300 disclosed in this specification is capable of being stored on an article of manufacture (e.g., a computer program accessible from any computer-readable device or storage media) to facilitate transporting and transferring such method to computing devices. The term "article of manufacture," as used herein, is intended to encompass a computer program accessible from any computer-readable device or storage media.

At operation 310, processing logic receives a configuration defining a (primary) data distribution path to provide live media data to one or more nodes of a peer-to-peer network (e.g., peer-to-peer network 140). The configuration can be received from, for example, network controller 120.

At operation 320, processing logic establishes a media data connection to each of the one or more nodes based on the data distribution path.

At operation 330, processing logic receives authentication data for a media segment related to the live media data. The authentication data can be received from media distribution node 110 via a secondary data distribution path. The authentication data can be a hash of a media segment, a hash of one or more frames of the media segment, etc.

At operation 340, processing logic receives the media segment related to the authentication data. The media segment can be received from media distribution node 110 via the primary data distribution path, or via one or more nodes of peer-to-peer network 140.

At operation 350, processing logic generates validation data related to the received media segment. The validation data can include a hash of the received media segment, a hash of one or more frames of the received media segment, etc.

At operation 360, processing logic determines whether the authentication data matches the validation data. Responsive to the authentication data matching the validation data, the processing logic proceeds to operation 370 where the processing logic consumes the media segment and, if instructed, retransmits the media segment to a child node according to the configuration. In some implementations, the processing logic can consume the media segment during the authentication process of operation 360. Responsive to the authentication data failing to match the validation data, the processing logic proceeds to operation 380 where the processing logic performs one or more remedial actions.

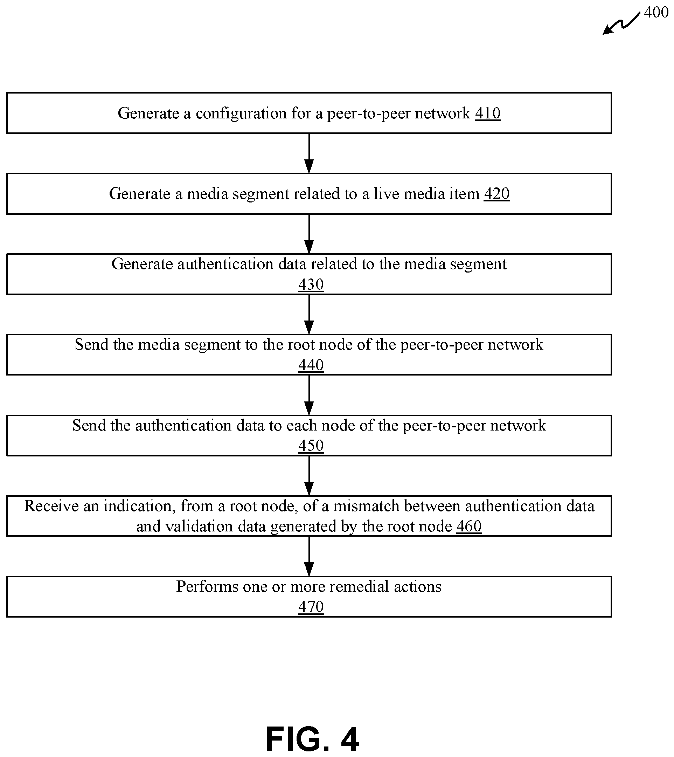

**FIG. 4** depicts a flow diagram of a method 400 for monitoring a media distribution system using peer-assisted delivery, in accordance with implementations of the present disclosure. Method 400 can be performed by processing logic that can include hardware (circuitry, dedicated logic, etc.), software (e.g., instructions run on a processing device), or a combination thereof. In some implementations, some or all the operations of method 400 can be performed by media distribution node 110.

At operation 410, processing logic generates a configuration for a peer-to-peer network. The configuration can define a set of one or more data distribution paths to provide (e.g., push) live media data to a set of nodes.

At operation 420, processing logic generates a media segment related to a live media item. The media segment can include a set of encoded frames.

At operation 430, processing logic generates authentication data related to the media segment.

At operation 440, processing logic sends the media segment to the root node of the peer-to-peer network. The root node can then consume and forward the media segment to additional nodes based on the data distribution path outlined in the configuration.

At operation 450, processing logic sends the authentication data to each node of the peer-to-peer network.

At operation 460, processing logic receives an indication, from a root node, of a mismatch between authentication data and validation data generated by the root node.

At operation 470, processing logic performs one or more remedial actions.

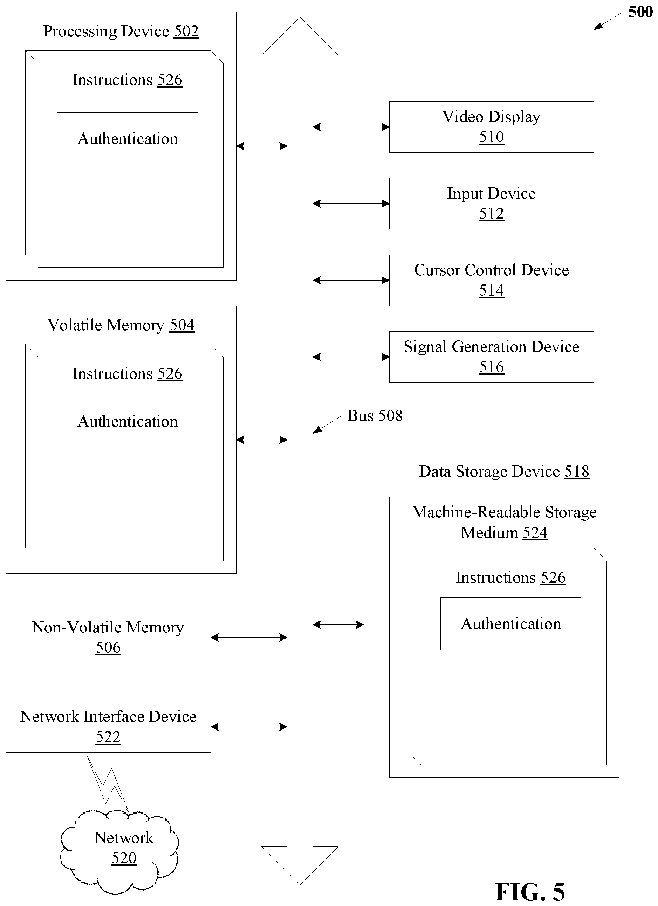

**FIG. 5** depicts a block diagram of a computer system operating in accordance with one or more aspects of the present disclosure. In certain implementations, computer system 500 can be connected (e.g., via a network, such as a Local Area Network (LAN), an intranet, an extranet, or the Internet) to other computer systems. Computer system 500 can operate in the capacity of a client device. Computer system 500 can operate in the capacity of a server or a client computer in a client-server environment. Computer system 500 can be provided by a personal computer (PC), a tablet PC, a set-top box (STB), a Personal Digital Assistant (PDA), a cellular telephone, a web appliance, a server, a network router, switch or bridge, or any device capable of executing a set of instructions (sequential or otherwise) that specify actions to be taken by that device. Further, the term "computer" shall include any collection of computers that individually or jointly execute a set (or multiple sets) of instructions to perform any one or more of the methods described herein.

In a further aspect, the computer system 500 can include a processing device 502, a volatile memory 504 (e.g., random access memory (RAM)), a non-volatile memory 506 (e.g., read-only memory (ROM) or electrically erasable programmable ROM (EEPROM)), and a data storage device 518, which can communicate with each other via a bus 508.

Processing device 502 can be provided by one or more processors such as a general purpose processor (such as, for example, a complex instruction set computing (CISC) microprocessor, a reduced instruction set computing (RISC) microprocessor, a very long instruction word (VLIW) microprocessor, a microprocessor implementing other types of instruction sets, or a microprocessor implementing a combination of types of instruction sets) or a specialized processor (such as, for example, an application specific integrated circuit (ASIC), a field programmable gate array (FPGA), a digital signal processor (DSP), or a network processor).

Computer system 500 can further include a network interface device 522. Computer system 500 also can include a video display unit 510 (e.g., an LCD), an input device 512 (e.g., a keyboard, an alphanumeric keyboard, a motion sensing input device, touch screen), a cursor control device 514 (e.g., a mouse), and a signal generation device 516.

Data storage device 518 can include a non-transitory machine-readable storage medium 524 on which can store instructions 526 (e.g., authentication instructions, hashing instructions, remedial actions instructions, etc.) encoding any one or more of the methods or functions described herein, including instructions encoding components of media distribution node, network controller node, and/or nodes of **FIG. 1** for implementing methods 300 and 400.

Instructions 526 can also reside, completely or partially, within volatile memory 504 and/or within processing device 502 during execution thereof by computer system 500, hence, volatile memory 504 and processing device 502 can also constitute machine-readable storage media.

While machine-readable storage medium 524 is shown in the illustrative examples as a single medium, the term "computer-readable storage medium" shall include a single medium or multiple media (e.g., a centralized or distributed database, and/or associated caches and servers) that store the one or more sets of executable instructions. The term "computer-readable storage medium" shall also include any tangible medium that is capable of storing or encoding a set of instructions for execution by a computer that cause the computer to perform any one or more of the methods described herein. The term "computer-readable storage medium" shall include, but not be limited to, solid-state memories, optical media, and magnetic media.

The methods, components, and features described herein can be implemented by discrete hardware components or can be integrated in the functionality of other hardware components such as ASICS, FPGAs, DSPs or similar devices. In addition, the methods, components, and features can be implemented by firmware modules or functional circuitry within hardware devices. Further, the methods, components, and features can be implemented in any combination of hardware devices and computer program components, or in computer programs.

Unless specifically stated otherwise, terms such as "receiving," "determining," "sending," "displaying," "identifying," "selecting," "excluding," "creating," "adding," or the like, refer to actions and processes performed or implemented by computer systems that manipulates and transforms data represented as physical (electronic) quantities within the computer system registers and memories into other data similarly represented as physical quantities within the computer system memories or registers or other such information storage, transmission or display devices. Also, the terms "first," "second," "third," "fourth," etc. as used herein are meant as labels to distinguish among different elements and cannot have an ordinal meaning according to their numerical designation.

Examples described herein also relate to an apparatus for performing the methods described herein. This apparatus can be specially constructed for performing the methods described herein, or it can comprise a general-purpose computer system selectively programmed by a computer program stored in the computer system. Such a computer program can be stored in a computer-readable tangible storage medium.

The methods and illustrative examples described herein are not inherently related to any particular computer or other apparatus. Various general-purpose systems can be used in accordance with the teachings described herein, or it can prove convenient to construct more specialized apparatus to perform methods 300 and 400 and/or each of its individual functions, routines, subroutines, or operations. Examples of the structure for a variety of these systems are set forth in the description above.

The above description is intended to be illustrative, and not restrictive. Although the present disclosure has been described with references to specific illustrative examples and implementations, it will be recognized that the present disclosure is not limited to the examples and implementations described. The scope of the disclosure should be determined with reference to the following claims, along with the full scope of equivalents to which the claims are entitled.

The specification includes the following subject-matter expressed in the form of clauses 1-22:
1. A method, comprising:
   receiving, by a processor of a first node in a media distribution system, from a second node in the media distribution system, a media segment;
   receiving, from a third node in the media distribution system, authentication data related to the media segment;
   authenticating, based on the authentication data, the media segment; and
   responsive to successfully authenticating the media segment, providing the media segment for consumption by the first node.
2. The method of clause 1, wherein authenticating the media segment further comprises:
   generating validation data of the media segment; and
   comparing the validation data to the authentication data.
3. The method of clause 1 or clause 2, further comprising:
   responsive to failing to successfully authenticate the media segment, performing one or more remedial actions.
4. The method of any of clauses 1-3, further comprising:
   responsive to failing to successfully authenticate the media segment, instructing the third node to perform one or more remedial actions.
5. The method of any of clauses 1-4, wherein the authentication data comprises at least one of a hash value of the media segment or a hash value of one or more frames associated with the media segment.
6. The method of any of clauses 1-5, wherein the media segment is with a part of a live media stream.
7. The method of any of clauses 1-6, further comprising:
   responsive to successfully authenticating the media segment, transmitting the media segment to a fourth node in the media distribution system.
8. A system comprising:
   a memory device; and
   a processing device coupled to the memory device, the processing device to perform operations comprising:
      receiving, by a first node in a media distribution system, from a second node in the media distribution system, a media segment;
      receiving, from a third node in the media distribution system, authentication data related to the media segment;
   authenticating, based on the authentication data, the media segment; and
      responsive to successfully authenticating the media segment, providing the media segment for consumption by the first node.
9. The system of clause 8, wherein authenticating the media segment further comprises:
   generating validation data of the media segment; and
   comparing the validation data to the authentication data.
10. The system of clause 8 or clause 9, wherein the operations further comprise:
   responsive to failing to successfully authenticate the media segment, performing one or more remedial actions.
11. The system of any of clauses 8-10, wherein the operations further comprise:
   responsive to failing to successfully authenticate the media segment, instructing the third node to perform one or more remedial actions.
12. The system of any of clauses 8-11, wherein the authentication data comprises at least one of a hash value of the media segment or a hash value of one or more frames associated with the media segment.
13. The system of any of clauses 8-12, wherein the media segment is with a part of a live media stream.
14. The system of any of clauses 8-13, wherein the operations further comprise:
   responsive to successfully authenticating the media segment, transmitting the media segment to a fourth node in the media distribution system.
15. A non-transitory computer-readable medium comprising instructions that, responsive to execution by a processing device, cause the processing device to perform operations comprising:
   receiving, by a first node in a media distribution system, from a second node in the media distribution system, a media segment;
   receiving, from a third node in the media distribution system, authentication data related to the media segment;
   authenticating, based on the authentication data, the media segment; and
   responsive to successfully authenticating the media segment, providing the media segment for consumption by the first node.
16. The non-transitory computer readable storage medium of clause 15, wherein authenticating the media segment further comprises:
   generating validation data of the media segment; and
   comparing the validation data to the authentication data.
17. The non-transitory computer readable storage medium of clause 15 or claim 16, wherein the operations further comprise:
   responsive to failing to successfully authenticate the media segment, performing one or more remedial actions.
18. The non-transitory computer readable storage medium of any of clauses 15-17, wherein the operations further comprise:
   responsive to failing to successfully authenticate the media segment, instructing the third node to perform one or more remedial actions.
19. The non-transitory computer readable storage medium of any of clauses 15-18, wherein the authentication data comprises at least one of a hash value of the media segment or a hash value of one or more frames associated with the media segment.
20. The non-transitory computer readable storage medium of any of clauses 15-19, wherein the operations further comprise:
   responsive to successfully authenticating the media segment, transmitting the media segment to a fourth node in the media distribution system.
21. A computer program product comprising instructions which, when executed by one or more processors, cause the processors to perform the method of any of clauses 1-7.
22. Computer-executable instructions which, when executed by one or more processors, cause the processors to perform the method of any of clauses 1-7.

## Claims

1. A method, comprising:
receiving, by a processor of a first node in a media distribution system, from a second node in the media distribution system, a media segment;
receiving, from a third node in the media distribution system, authentication data related to the media segment;
authenticating, based on the authentication data, the media segment; and
responsive to successfully authenticating the media segment, providing the media segment for consumption by the first node.

2. The method of claim 1, wherein authenticating the media segment further comprises:
generating validation data of the media segment; and
comparing the validation data to the authentication data.

3. The method of claim 1 or claim 2, further comprising:
responsive to failing to successfully authenticate the media segment, performing one or more remedial actions; and/or
responsive to failing to successfully authenticate the media segment, instructing the third node to perform one or more remedial actions.

4. The method of any of claims 1-3, wherein the authentication data comprises at least one of a hash value of the media segment or a hash value of one or more frames associated with the media segment; and/or
wherein the media segment is with a part of a live media stream.

5. The method of any of claims 1-4, further comprising:
responsive to successfully authenticating the media segment, transmitting the media segment to a fourth node in the media distribution system.

6. A system comprising:
a memory device; and
a processing device coupled to the memory device, the processing device to perform operations comprising:
receiving, by a first node in a media distribution system, from a second node in the media distribution system, a media segment;
receiving, from a third node in the media distribution system, authentication data related to the media segment;
authenticating, based on the authentication data, the media segment; and
responsive to successfully authenticating the media segment, providing the media segment for consumption by the first node.

7. The system of claim 6, wherein authenticating the media segment further comprises:
generating validation data of the media segment; and
comparing the validation data to the authentication data.

8. The system of claim 6 or claim 7, wherein the operations further comprise:
responsive to failing to successfully authenticate the media segment, performing one or more remedial actions; and/or
responsive to failing to successfully authenticate the media segment, instructing the third node to perform one or more remedial actions.

9. The system of any of claims 6-8, wherein the authentication data comprises at least one of a hash value of the media segment or a hash value of one or more frames associated with the media segment; and/or
wherein the media segment is with a part of a live media stream.

10. The system of any of claims 6-9, wherein the operations further comprise:
responsive to successfully authenticating the media segment, transmitting the media segment to a fourth node in the media distribution system.

11. A non-transitory computer-readable medium comprising instructions that, responsive to execution by a processing device, cause the processing device to perform operations comprising:
receiving, by a first node in a media distribution system, from a second node in the media distribution system, a media segment;
receiving, from a third node in the media distribution system, authentication data related to the media segment;
authenticating, based on the authentication data, the media segment; and
responsive to successfully authenticating the media segment, providing the media segment for consumption by the first node.

12. The non-transitory computer readable storage medium of claim 11, wherein authenticating the media segment further comprises:
generating validation data of the media segment; and
comparing the validation data to the authentication data.

13. The non-transitory computer readable storage medium of claim 11 or claim 12, wherein the operations further comprise:
responsive to failing to successfully authenticate the media segment, performing one or more remedial actions; and/or
responsive to failing to successfully authenticate the media segment, instructing the third node to perform one or more remedial actions.

14. The non-transitory computer readable storage medium of any of claims 11-13, wherein the authentication data comprises at least one of a hash value of the media segment or a hash value of one or more frames associated with the media segment; and/or wherein the operations further comprise:
responsive to successfully authenticating the media segment, transmitting the media segment to a fourth node in the media distribution system.

15. A computer program product comprising instructions which, when executed by one or more processors, cause the processors to perform the method of any of claims 1-5.
